# EUROPÄISCHE PATENTANMELDUNG

(11) **EP 0 745 955 A2**
(43) Veröffentlichungstag der Anmeldung: **04.12.1996**
(21) Anmeldenummer: 96108620.4
(22) Anmeldetag: 30.05.1996
(51) Int. Cl.: G06K 19/077

(54) **Verfahren und Vorrichting zum Herstellen einer Smart Card**

(30) Priorität: 31.05.1995 DE 19519899
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Herstellen einer Smart Card. Eine flache Seite der Smart Card wird durch eine Folie, vorzugsweise ein Label (10) gebildet. Das Label (10) und ein Modul (13), das einen Chip (9) sowie ein Träger- und Kontaktplättchen (5) umfaßt, wird an eine Oberfläche eines Hohlraums eines Kunststoff-Spritzgießwerkzeuges eingebracht. Der verbleibende Hohlraum wird alsdann mit einer Kunststoffmasse ausgespritzt. Das Modul (13) nimmt dabei eine vorbestimmte Lage im Hohlraum ein. Das Modul (13) wird vor dem Einbringen in den Hohlraum in einer vorbestimmten Position an dem Label (10) befestigt und gemeinsam mit dem Label (10) in den Hohlraum eingebracht.

## Beschreibung

Die Erfindung betrifft ein Verfahren Zum Herstellen einer Smart Card, bei dem mindestens eine, eine flache Seite der Smart Card bildende Folie sowie ein, einen Chip sowie ein Träger- und Kontaktplättchen umfassendes Modul an eine Oberfläche eines Hohlraums eines Kunststoff-Spritzgießwerkzeugs eingebracht werden, und der verbleibende Hohlraum alsdann mit einer Kunststoffmasse ausgespritzt wird, wobei das Modul eine vorbestimmte Lage im Hohlraum einnimmt.

Die Erfindung betrifft ferner eine Vorrichtung zum Herstellen einer Smart Card, mit einer Handhabungsvorrichtung zum Einbringen mindestens einer, eine flache Seite der Smart Card bildenden Folie sowie eines, einen Chip sowie ein Träger- und Kontaktplättchen umfassenden Moduls in einer vorbestimmten Lage an eine Oberfläche eines Hohlraums eines Kunststoff-Spritzgießwerkzeugs, und mit einer Einspritzvorrichtung zum Ausspritzen des nach dem Einbringen von Folie und Modul verbleibenden Hohlraums mit einer Kunststoffmasse.

Die Erfindung betrifft schließlich eine Folie für die Herstellung von Smart Cards, wobei die Folie zur Ausbildung einer flachen Seite der Smart Card vorgesehen ist.

Ein Verfahren, eine Vorrichtung sowie eine Folie der vorstehend genannten Art sind aus der EP-B1-0 399 868 bekannt.

Die vorliegende Erfindung befaßt sich vorzugsweise, aber nicht ausschließlich, mit der Herstellung von sogenannten Smart Cards. Unter einer Smart Card versteht man eine ein- oder doppelseitig kaschierte Kunststoffkarte, die üblicherweise mit Hinweis- und/oder Werbeaufdrucken und/oder mit Sicherheitsmerkmalen, z.B. einem Hologramm, einem Magnetstreifen, einem Foto des Karteninhabers oder dergleichen, versehen ist. In die Smart Card ist ein sogenanntes Modul eingebettet. Das Modul besteht aus einem elektronischen Schaltkreis (Chip) sowie üblicherweise einem Trägerplättchen, auf dem der Chip sitzt. Das Plättchen bildet bei bestimmten Karten mit mehreren Oberflächensegmenten elektrische Kontakte, die von außen zugänglich sind. Bei anderen Kartenarten sind Antennen in der Karte vorgesehen, um Informationen, z.B. Daten, berührungslos auszutauschen. Derartige Smart Cards werden als Telefonkarten, Berechtigungskarten für mobile Nachrichtengeräte, als Scheckkarten im Geldverkehr, als Berechtigungsnachweise für Krankenkassen oder dergleichen, als Berechtigungsnachweis für den Zugang in bestimmte Gebäude oder Gebäudeteile und für andere Zwecke, z.B. zur Warensicherung, eingesetzt. Der Benutzer schiebt die Smart Card zu diesen Zwecken in einen Kartenleser oder führt ihn daran vorbei, der über eine entsprechende Kontakt- oder Antenneneinrichtung mit dem elektronischen Schaltkreis in der Smart Card in Verbindung tritt. Auf diese Weise kann z. B. bei einer Telefonkarte oder einer Scheckkarte ein vorhandenes Guthaben überprüft, eine Identität festgestellt oder ein sonstiger Datenaustausch vorgenommen werden.

Um Smart Cards zugleich als Werbeträger einsetzen zu können, stellt man diese vorzugsweise dadurch her, daß man eine oder zwei Folien, vorzugsweise sogenannte Label verwendet, die eine oder die beiden flachen Seiten der Smart Card im hergestellten Zustand bilden. Unter einem Label ist dabei eine vorzugsweise einseitig bedruckte Folie zu verstehen. Das Label ist mit dem Werbeaufdruck oder dergleichen versehen. Der Aufdruck muß dabei von hoher Qualität sein. Es hat sich herausgestellt, daß eine bessere Druckqualität dann erreicht wird, wenn die Folie, die das Label bildet, vor der Herstellung der Smart Card bedruckt wird.

Das Label wird zur Herstellung der Smart Card in den Hohlraum eines Kunststoff-Spritzgießwerkzeugs eingelegt. Der Hohlraum hat hierzu eine flache, quaderförmige Gestalt, und die Label werden auf die flachen Oberflächen des Hohlraums aufgelegt. Es ist dabei dafür Sorge zu tragen, daß die Label im Hohlraum sauber positioniert sind und an die Oberflächen des Hohlraumes angedrückt werden, damit anschließend ein Spritzvorgang störungsfrei ablaufen kann.

Für die Folie des Labels und das einzuspritzende Kunststoffmaterial wird vorzugsweise der gleiche oder ein ähnlicher Kunststoff verwendet, z.B. Polystyrol, Propylen, ABS oder Polycarbonat, damit man nach Beendigung des Einspritzvorganges einen besonders guten Verbund zwischen den Labeln und dem eingespritzten Kunststoff erhält.

Der Begriff "Label" ist in diesem Zusammenhang nur beispielhaft zu verstehen. Allgemein gesprochen können im Rahmen der vorliegenden Erfindung sowohl zugeschnittene wie auch nichtzugeschnittene Folien verwendet werden. Diese Folien können ein- oder beidseitig bedruckt sein. Sie können auf einer oder auf mehreren Oberflächen des Gegenstandes, beispielsweise der Smart Card, angeordnet werden. Daneben ist auch die Verwendung von sogenannten Transfer-Labeln oder Transfer-Folien möglich. Diese sind mit einem Aufdruck versehen, der beim Spritzen des Gegenstandes auf den Gegenstand übertragen wird. Die Folie wird dann nach dem Spritzen abgelöst und entsorgt. Es können somit Folien oder Label auf einer oder mehreren Oberflächen eingesetzt werden oder alternierend mit Transfer-Labeln oder Transfer-Folien, oder es können nur letztere eingesetzt werden. Die Verarbeitung all dieser Materialien kann stückweise oder von der Rolle erfolgen.

Herkömmlicherweise wird das Kunststoffmaterial über einen Angußschlitz im Bereich einer Schmalseite des Hohlraums zwischen die beiden Label eingespritzt.

Im Querschnitt sieht die Smart Card dann so aus, daß die Oberfläche auf der Rückseite durch eines der Label gebildet wird. Auf der Vorderseite, nämlich der Sichtseite, befindet sich das Kontakt- und Trägerplättchen, hinter dem sich der Chip befindet.

Aus der EP-B1-0 399 868 ist ein Verfahren zum Herstellen einer Smart Card bekannt. Bei diesem bekannten Verfahren wird der Chip zunächst auf einem Metallband befestigt und verdrahtet. Der Chip wird dann auf dem Metallband in einen Kunststoff eingegossen, so daß ein Modul entsteht, das bereits eine gewisse Dicke aufweist. Das Modul ist so gestaltet, daß seine Dicke der Höhe des Hohlraums im Werkzeug entspricht. Bei geschlossenem Werkzeug wird damit ein Druck auf das Modul ausgeübt, der dieses an einer bestimmten Position im Hohlraum fixiert. Bei Ausführungsformen des bekannten Verfahrens wird auf ein vorher bedrucktes Label verzichtet und stattdessen ein Bildtransfer-Film in den Hohlraum eingelegt. Das vom Bildtransfer-Film getragene Bild haftet auf dem eingespritzten Kunststoffmaterial. Nach dem Entformen der Smart Card befindet sich der Aufdruck damit auf dem labellosen Kunststoffkörper und der Bildtransfer-Film kann entfernt werden. Bei Varianten des Herstellungsverfahrens kann eine oder beide flachen Seiten der Smart Card durch derartige Filme bedruckt werden. Aber auch die Verwendung von Labeln auf einer oder beiden flachen Seiten ist bei dem bekannten Verfahren möglich. Da bei der Verwendung von Labeln das bekannte Verfahren vorsieht, das Modul auf der Innenseite des Labels anzuordnen, wird das Label an der Auflagestelle des Moduls soweit ausgeschnitten, daß die Kontakte des Moduls von der flachen Seite der fertigen Smard Card her zugänglich sind.

Das bekannte Verfahren hat den Nachteil, daß die Positionierung der Moduls im Hohlraum des Werkzeugs nur unter Schwierigkeiten gewährleistet werden kann. Die zur Fixierung des Moduls im Hohlraum erforderlichen Anpreßkräften werden nämlich erst nach dem Schließen des Werkzeugs erzeugt, so daß während des Schließvorganges des Werkzeugs eine Lageveränderung des Moduls eintreten kann.

Ein weiterer Nachteil des bekannten Verfahrens besteht darin, daß bei der Verwendung von zwei Labeln und/oder Bildtransfer-Filmen zwei separate Elemente in den Hohlraum des Werkzeugs eingeführt werden müssen. Da Smart Cards nur Kantenlängen von wenigen Zentimetern aufweisen, sind die Label bzw. die Bildtransfer-Filme relativ weich und instabile Gebilde, weil die Label bzw. Folien sehr dünn sind. Eine präzise Handhabung und Positionierung ist schwierig. Dies gilt insbesondere dann, wenn niedrige Zykluszeiten angestrebt werden, die naturgemäß mit hohen Verfahrgeschwindigkeiten sowie hohen Beschleunigungen bzw. Verzögerungen des Handlingsgerätes verbunden sind. Die relativ weichen und instabilen Label bzw. Bildtransfer-Filme können sich dabei durch Massenträgheitskräfte verbiegen, umklappen und dergleichen, so daß die Gefahr besteht, daß ein zu hoher Prozentsatz an Ausschuß produziert wird.

Ein weiterer Nachteil des bekannten Verfahrens besteht darin, daß nach dem Entformen der Smart Card im Bereich des Angusses noch eine Materialtrennung erforderlich ist. Durch den Angußschlitz entsteht ein sogenannter Filmanguß, der nach oder bei dem Entformen der Smart Card abgetrennt werden muß. Bei einer derartigen Abtrennung eines Angusses besteht jedoch immer das Risiko, daß eine unsaubere Trennstelle entsteht, was bei den Abnehmern von Smart Cards äußerst unerwünscht ist.

Die im Rahmen der vorliegenden Anmeldung beanspruchte Erfindung bezieht sich darüber hinaus, auch wenn dies nicht im einzelnen anhand von Ausführungsbeispielen beschrieben ist, auf Gegenstände aus Kunststoff allgemein, soweit sich dabei vergleichbare Probleme ergeben.

So ist es beispielsweise bekannt, bei der Herstellung von Kunststoffbehältern, d.h. kleinen Dosen, Schalen und dergleichen sowie deren Deckeln oder Einsätzen eine Seite dieser Gegenstände mit einer Kaschierung zu versehen. Die Seite kann dabei z.B. flach, gewölbt oder zylindrisch gebogen sein. Die Kaschierung, die z. B. Werbe- oder Gebrauchshinweise enthalten kann, kann ebenfalls durch ein Label, d.h. eine umspritzte Kunststoffolie gebildet werden.

Vergleichbare Probleme ergeben sich auch bei solchen Kunststoffgegenständen, bei denen mechanische, insbesondere metallische Gegenstände umgespritzt werden, also z. B. Befestigungselemente, Verstärkungselemente, Scharniere oder elektrische/elektronische Elemente, z.B. Antennen, Abschirmungen oder dergleichen.

Darüber hinaus stellt sich bei der Herstellung von Gegenständen aus Kunststoff im Spritzgießverfahren generell das Problem, die erforderlichen Angußstellen am fertigen Produkt möglichst unsichtbar auszubilden.

Der Erfindung liegt demgegenüber die Aufgabe zugrunde, ein Verfahren, eine Vorrichtung sowie eine Folie der eingangs genannten Art dahingehend weiterzubilden, daß die genannten Nachteile vermieden werden. Insbesondere soll gewährleistet sein, daß das Modul im Hohlraum des Werkzeugs in einfacher Weise und exakt positioniert werden kann, wobei die Positionierung auch während des Schließvorganges des Werkzeugs und beim nachfolgenden Einspritzvorgang beibehalten wird.

Gemäß dem eingangs genannten Verfahren wird diese Aufgabe erfindungsgemäß dadurch gelöst, daß das Modul vor dem Einbringen in den Hohlraum in einer vorbestimmten Position an der einen Folie befestigt und gemeinsam mit der Folie in den Hohlraum eingebracht wird.

Gemäß der eingangs genannten Vorrichtung wird die Aufgabe erfindungsgemäß dadurch gelöst, daß eine Befestigungsvorrichtung vorgesehen ist, um das Modul vor dem Einbringen in den Hohlraum in einer vorbestimmten Position an der einen Folie zu befestigen.

Schließlich wird die Aufgabe erfindungsgemäß noch dadurch gelöst, daß an der Folie ein, einen Chip sowie ein Träger- und Kontaktplättchen umfassendes Modul befestigt ist.

Die der Erfindung zugrundeliegende Aufgabe wird auf diese Weise vollkommen gelöst.

Durch die Erfindung wird nämlich erreicht, daß das Modul mit der Folie vor dem Einbringen in den Hohlraum des Werkzeugs fest verbunden wird. Es ist daher nur noch erforderlich, die Folie selbst im Hohlraum exakt zu positionieren und an der positionierten Stelle zu halten. Dies kann in herkömmlicher Weise durch Anlegen eines Unterdrucks, durch elektrostatische Kräfte und dergleichen erreicht werden. Die Lage des Moduls ist dabei von selbst mit gewährleistet, weil das Modul fest mit der Folie verbunden ist. Es ist daher im Gegensatz zum geschilderten Stand der Technik weder erforderlich, zwei Positionierungsvorgänge vorzunehmen, nämlich einmal für die Folie und einmal für das Modul und es müssen auch keine weiteren Maßnahmen getroffen werden, um das Modul an Ort und Stelle zu halten. Insbesondere wird im Gegensatz zum Stand der Technik erfindungsgemäß erreicht, daß die Lage des Moduls an der Folie und damit im Hohlraum auch während des Schließvorganges des Werkzeugs garantiert wird. Die Befestigung des Moduls an der Folie kann darüber hinaus so dauerhaft und widestandsfähig ausgebildet werden, daß auch während des Einspritzvorganges keine weiteren Maßnahmen zur Halterung des Moduls an der vorbestimmten Position erforderlich sind.

Bevorzugt ist, wenn das Modul direkt an der Oberfläche des Hohlraums anliegt.

Diese Maßnahme hat den Vorteil, daß das Modul körperlich zugänglich ist, so daß ein elektrischer Kontakt zum Modul hergestellt werden kann.

Alternativ kann man aber auch die mindestens eine Folie zwischen dem Modul und der Oberfläche des Hohlraums anordnen.

Diese Maßnahme hat den Vorteil, daß eine vollkommen homogene Oberfläche entsteht und für den Betrachter nicht erkennbar ist, an welcher Stelle der Smart Card sich das Modul befindet. Ein Austausch von Signalen oder Daten ist in diesem Fall berührungslos möglich, beispielsweise durch kapazitive, induktive oder sonstige Antennenanordnungen.

Bei Ausgestaltungen der Erfindung kann die mindestens eine Folie entweder ein Label, ein Trägerfilm oder eine Bildtransferfolie sein.

Durch Konfektionieren des Moduls mit der Folie kann die Befestigung auf unterschiedliche Weise erreicht werden.

Bei einem bevorzugten Ausführungsbeispiel der Erfindung wird das Modul durch Kleben mit der Folie verbunden.

Diese Maßnahme hat den Vorteil, daß das Modul mittels relativ einfacher Prozesse an die Folie geklebt werden kann, indem z. B. Klebepunkte auf die Folie oder das Modul aufgebracht und die beiden Elemente dann zusammengefügt werden. Durch Auswahl handelsüblicher Kleber kann eine hohe Klebkraft erreicht werden.

Darüber hinaus ist es bei Ausführungsformen der Erfindung möglich, das Modul durch Formschluß mit der Folie zu verbinden, bspw. mittels Tiefziehen.

Diese Maßnahme, die alternativ oder zusätzlich zum vorgeschlagenen Kleben eingesetzt werden kann, ist zwar etwas aufwendiger als das Kleben alleine, kann darüber hinaus aber die Verhältnisse während des Einspritzvorganges erleichtern, weil sich dann die Folie bereits während der Konfektionierung an das Modul anlegt.

Bei einem weiteren Ausführungsbeispiel der Erfindung ist das Modul mit einem Vorsprung versehen, der durch eine Ausnehmung der Folie greift.

Diese Maßnahme hat den Vorteil, daß die Verbindung zwischen Modul und Folie durch einfache Handhabung erreicht werden kann, indem z. B. die Elemente so zusammengefügt werden, daß die Zunge elastisch durch die Ausnehmung und dann hinter die Folie schnappt.

Bei weiteren Ausführungsbeispielen der Erfindung wird das Modul in einer Aussparung der Folie gehalten. Die Aussparung kann dabei entweder den Chip oder das Plättchen umschließen.

Auch diese Maßnahme hat den Vorteil, daß die Verbindung durch einfaches Fügen ohne Notwendigkeit von Zusatzstoffen und ohne die Notwendigkeit von Wärmeeinwirkung erreicht wird.

Bevorzugt ist ferner, wenn das Modul mit einem über die Aussparung ragenden Vorsprung versehen ist.

Auch diese Maßnahme hat den Vorteil, daß eine formschlüssige Halterung des Moduls erreicht wird.

Entsprechendes gilt, wenn bei anderen Ausführungsbeispielen der Erfindung die Folie mit einer das Modul haltenden Zunge versehen ist.

Bei weiteren Ausführungsbeispielen der Erfindung führt von der Position des Moduls ausgehend ein Steg zu einer zweiten, die gegenüberliegende Seite bildenden Folie.

Diese Maßnahme hat den Vorteil, daß bei geschlossenem Werkzeug bereits eine Haltekraft zwischen den beiden Folien erreicht wird, so daß beide Folien durch Druck gegen ihre jeweiligen Oberflächen des Hohlraums des Werkzeugs gehalten werden.

Bei Varianten dieses Ausführungsbeispiels kann der Steg als ein Teil des Moduls oder als ein Ausschnitt der Folie ausgebildet sein.

Wenn der Steg als eine elektrisch leitfähige Stütze ausgebildet ist, kann in vorteilhafter Weise eine Signalübertragung von Chip zu einer an der zweiten Folie angeordneten Antenne vorgesehen werden.

Bei diesen Ausführungsbeispielen ist ferner bevorzugt, wenn der Steg über eine Feder an der zweiten Folie anliegt.

Diese Maßnahme hat den Vorteil, daß beim Schließen des Werkzeugs die wechselseitige Andrückkraft allmählich aufgebracht wird.

Bei einer bevorzugten Weiterbildung der Erfindung wird das Modul mittels einer das Modul mindestens teilweise überdeckenden Einbettmasse an der Folie befestigt.

Diese Maßnahme hat den Vorteil, daß das Modul in einem einfachen Produktionsvorgang fixiert werden kann, indem es ganz oder teilweise auf der Folie mit der Einbettmasse überdeckt wird. Die Einbettmasse kann darüber hinaus einer mechanischen Beschädigung des Moduls entgegenwirken und schließlich zur Verankerung des Moduls in der fertiggespritzten Smart Card beitragen.

Bei weiteren Ausführungsbeispielen der Erfindung ragen in den verbleibenden Hohlraum Verankerungen hinein, die mit dem Modul verbunden sind.

Diese Maßnahme hat den Vorteil, daß die Ausreißfestigkeit des Moduls erhöht wird, weil die Verankerungen beim Einspritzen der Kunststoffmasse einen innigen Verbund mit der Kunststoffmasse bilden.

Bei einer Weiterbildung dieser Variante können die Verankerungen unmittelbar mit dem Modul verbunden sein.

Diese Maßnahme hat den Vorteil, daß die Verankerungen bereits bei der Herstellung des Moduls vorbereitet werden können.

Bei einer Variante werden die Verankerungen teilweise in der Einbettmasse eingelagert.

Diese Maßnahme hat den Vorteil, daß die Verankerungen im selben Arbeitsgang wie dem Aufbringen der Einbettmasse angebracht werden können.

In manchen Anwendungsfällen kann eine vorteilhafte Wirkung ferner dadurch erzielt werden, daß die Folie mittels Zapfen in der vorbestimmten Lage im Hohlraum gehalten wird, wie dies an sich bekannt ist.

Diese Maßnahme hat den Vorteil, daß bei extremen Anwendungsfällen eine zusätzliche Lagesicherung für das Modul bzw. die Folie erforderlich ist.

Der Zapfen kann in diesen Fällen Teil des Werkzeugs oder Teil eiens Einlegearmes sein. Im letztgenannten Fall dient die Maßnahme dann der exakten Positionierung im Hohlraum, weil der Einlegearm vor dem Schließen des Werkzeugs aus dem Hohlraum herausgefahren wird.

Bei weiteren Ausführungsbeispielen der Erfindung liegt das Modul federnd an einer zweiten, die gegenüberliegende Seite bildenden Folie an.

Diese Maßnahme hat den bereits erwähnten Vorteil, daß eine wechselseitige Andrückkraft ausgeübt wird, die sich beim Schließen des Werkzeugs allmählich aufbaut.

In bevorzugter Weiterbildung dieses Ausführungsbeispiels liegt das Modul über eine elastische Wölbung an der zweiten Folie an.

Bei einer ersten Variante dieses Ausführungsbeispiels ist die Wölbung eine Wölbung der Folie.

Diese Maßnahme hat den Vorteil, daß durch einfache Formgebung der Folie ohne zusätzliche Elemente die erwähnte Andrückkraft aufgebracht werden kann.

Bei einer anderen Variante dieses Ausführungsbeispiels wird die Wölbung hingegen durch ein gewölbtes, separates Bauteil gebildet.

Diese Maßnahme hat den Vorteil, daß die physikalischen Eigenschaften durch entsprechende Werkstoffwahl beim separaten Bauteil nach Bedarf eingestellt werden können.

Weitere Vorteile ergeben sich aus der Beschreibung und der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer Smart Card;
- Fig. 2: in stark vergrößertem Maßstab einen Querschnitt durch die Smart Card gemäß Fig. 1 entlang der Linie II-II;
- Fig. 3: eine schematisierte Ansicht eines Kunststoff-Spritzgießwerkzeugs mit zwei Werkzeughälften, wie es zur Herstellung von Smart Cards gemäß Fig. 1 Verwendung finden kann, in einer ersten Arbeitsphase;
- Fig. 4: eine Darstellung, ähnlich Fig. 3, jedoch für eine zweite Arbeitsphase des Kunststoff-Spritzgießwerkzeugs;
- Fig. 5: eine Darstellung, ähnlich Fig. 3, jedoch für eine dritte Arbeitsphase des Kunststoff-Spritzgießwerkzeugs;
- Fig. 6: eine Darstellung, ähnlich Fig. 3, jedoch für eine vierte Arbeitsphase des Kunststoff-Spritzgießwerkzeugs;
- Fig. 7: eine Darstellung, ähnlich Fig. 3, jedoch für eine fünfte Arbeitsphase des Kunststoff-Spritzgießwerkzeugs;
- Fig. 8: eine Darstellung, ähnlich Fig. 3, jedoch für eine sechste Arbeitsphase des Kunststoff-Spritzgießwerkzeugs;
- Fig. 9: in stark vergrößertem Maßstab eine Seitenansicht eines aus einem Chip und einem Träger- und Kontaktplättchen bestehenden Modul zur Erläuterung eines ersten Ausführungsbeispiels einer Befestigungstechnik für das Moduls an einem eine Oberfläche der Smart Card bildenden Label;
- Fig. 10: eine Darstellung, ähnlich Fig. 9, jedoch zur Darstellung eines zweiten Arbeitsschritts;
- Fig. 11: eine Darstellung, ähnlich Fig. 9, jedoch zur Darstellung eines dritten Arbeitsschritts;
- Fig. 12: eine Darstellung, ähnlich den Figuren 9 bis 11, für ein zweites Ausführungsbeispiel einer Befestigungstechnik;
- Fig. 13: eine Darstellung, ähnlich Fig. 12, jedoch für zwei Varianten eines dritten Ausführungsbeispiels einer Befestigungstechnik;
- Fig. 14: eine Darstellung, ähnlich Fig. 12, jedoch für ein viertes Ausführungsbeispiel einer Befestigungstechnik;
- Fig. 15: eine Darstellung, ähnlich Fig. 12, jedoch für drei Varianten eines fünften Ausführungsbeispiels einer Befestigungstechnik;
- Fig. 16: eine Darstellung, ähnlich Fig. 12, jedoch für ein sechstes Ausführungsbeispiel einer Befestigungstechnik;
- Fig. 17: eine Darstellung, ähnlich Fig. 12, jedoch für ein siebtes Ausführungsbeispiel einer Befestigungstechnik;
- Fig. 18: eine Darstellung, ähnlich Fig. 12, jedoch für ein achtes Ausführungsbeispiel einer Befestigungstechnik, entlang der Linie XVIII-XVIII von Fig. 19;
- Fig. 19: eine Draufsicht auf die Anordnung gemäß Fig. 18;
- Fig. 20: eine Darstellung, ähnlich Fig. 12, jedoch für zwei Varianten eines zehnten Ausführungsbeispiels einer Befestigungstechnik;
- Fig. 21: eine Darstellung, ähnlich Fig. 12, zur Erläuterung eines ersten Ausführungsbeispiels eines aus zwei Labeln gebildeten Sandwich;
- Fig. 22: eine Darstellung, ähnlich Fig. 21, jedoch für ein zweites Ausführungsbeispiel eines Sandwich;
- Fig. 23: eine Darstellung, ähnlich Fig. 21, jedoch für ein drittes Ausführungsbeispiel eines Sandwich;
- Fig. 24: eine Darstellung, ähnlich Fig. 21, jedoch für ein viertes Ausführungsbeispiel eines Sandwich, schematisch dargestellt in einer Anordnung in einem Kunststoff-Spritzgießwerkzeug;
- Fig. 25: in verkleinertem Maßstab einen Zuschnitt zur Herstellung des vierten Ausführungsbeispiels eines Sandwich gemäß Fig. 24;
- Fig. 26: eine Darstellung, ähnlich Fig. 3, zur Erläuterung eines Herstellungsverfahrens einer Smart Card unter Verwendung eines Sandwich in einem Kunststoff-Spritzgießwerkzeug in einer ersten Arbeitsphase;
- Fig. 27: eine Darstellung, ähnlich Fig. 26, jedoch für eine zweite Arbeitsphase des Kunststoff-Spritzgießwerkzeugs;
- Fig. 28: eine Darstellung, ähnlich Fig. 26, jedoch für eine dritte Arbeitsphase des Kunststoff-Spritzgießwerkzeugs;
- Fig. 29: eine Darstellung, ähnlich Fig. 26, zur Erläuterung einer Variante eines derartigen Herstellungsverfahrens, in einer ersten Arbeitsphase des Kunststoff-Spritzgießwerkzeugs;
- Fig. 30: eine Darstellung, ähnlich Fig. 29, jedoch für eine zweite Arbeitsphase des Kunststoff-Spritzgießwerkzeugs;
- Fig. 31: eine Darstellung, ähnlich Fig. 24, zur Erläuterung eines Spritzgießverfahrens mit besonderer Angußtechnik, in einer ersten Arbeitsphase;
- Fig. 32: eine Darstellung, ähnlich Fig. 31, jedoch für eine zweite Arbeitsphase;
- Fig. 33: eine Darstellung, ähnlich Fig. 31, jedoch für eine dritte Arbeitsphase;
- Fig. 34: in stark vergrößertem Maßstab eine Draufsicht auf ein erstes Ausführungsbeispiel einer Zungenanordnung zur Verwendung bei dem in den Figuren 31 bis 33 dargestellten Verfahren;
- Fig. 35: eine Darstellung, ähnlich Fig. 34, für ein zweites Ausführungsbeispiel einer derartigen Zungenanordnung;
- Fig. 36: eine weitere Darstellung, ähnlich Fig. 34, mit einem Scherelement, wie es ebenfalls bei dem in Figuren 31 bis 33 dargestellten Verfahren Verwendung finden kann, in einer ersten Arbeitsphase;
- Fig. 37: eine Darstellung, ähnlich Fig. 36, jedoch für eine zweite Arbeitsphase;
- Fig. 38: eine Darstellung eines fünften Ausführungsbeispiels eines Sandwich in einem Werkzeughohlraum.

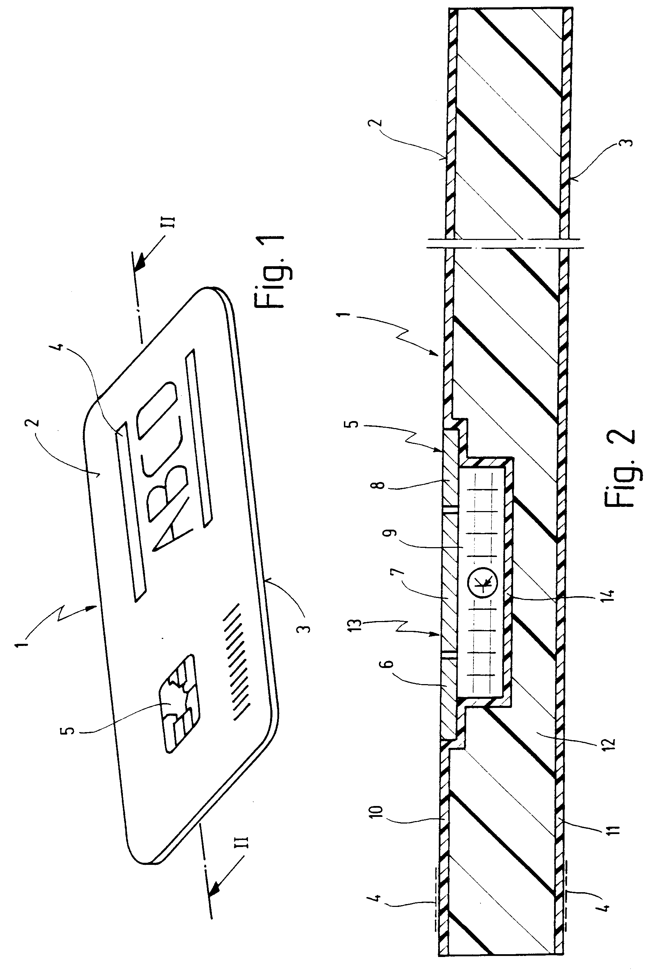

In Fig. 1 bezeichnet 1 insgesamt eine sogenannte Smart Card. Hierunter versteht man eine Kunststoffkarte, die üblicherweise mit Hinweis- und/oder Werbeaufdrucken, mit Hologrammen, Magnetstreifen, Sicherheitsmerkmalen oder dergleichen versehen ist. In die Smart Card ist ein elektronischer Schaltkreis eingebettet, der von außen über elektrische Kontakte oder eine Antenne zugänglich ist. Derartige Smart Cards werden in großem Umfang als Telefonkarten, Berechtigungskarten für mobile Nachrichtengeräte, als Scheckkarten im Geldverkehr, als Berechtigungsnachweise für Krankenkassen und dergleichen oder als Berechtigungsnachweis für den Zugang in bestimmte Gebäude oder Gebäudeteile usw. eingesetzt. Der Benutzer schiebt die Smart Card zu diesen Zwecken in einen Kartenleser, der über eine entsprechende Kontakteinrichtung mit dem elektronischen Schaltkreis in der Smart Card in Verbindung tritt. Auf diese Weise kann ein vorhandenes Guthaben überprüft, eine Identität festgestellt oder ein sonstiger Datenaustausch vorgenommen werden.

Die Smart Card 1 ist auf ihrer Oberseite 2 und/oder ihrer Unterseite 3 mit einem Aufdruck 4 versehen. Der Aufdruck 4 kann ein Werbeaufdruck sein oder Gebrauchshinweise für die Smart Card 1 enthalten. Für den Aufdruck 4 wird eine äußerst gute Wiedergabequalität verlangt, insbesondere dann, wenn Werbeaufdrucke oder Hologramme vorgesehen sind.

Bündig mit der Oberseite 2 ist ein Träger- und Kontaktplättchen 5 in die Smart Card 1 eingelassen.

Fig. 2 zeigt in stark vergrößertem Maßstab entlang der Schnittlinie II-II von Fig. 1 weitere bauliche Einzelheiten in schematisierter Darstellung.

Man erkennt, daß das Träger- und Kontaktplättchen 5 in mehrere Kontaktzonen 6, 7 und 8 unterteilt ist. Diese Kontaktzonen 6 bis 8 stehen in nicht näher dargestellter Weise mit den Anschlüssen eines Chip 9, d.h. eines elektronischen Schaltkreises, in Verbindung. Über die Kontaktzonen 6 bis 8 kann damit ein Datenaustausch von außen mit dem Chip 9 vorgenommen werden, sofern keine Antenne für einen berührungslosen Datenaustausch vorgesehen ist.

Die Oberseite 2 und/oder die Unterseite 3 der Smart Card 1 werden durch sogenannte Label 10 und 11 gebildet. Unter einem Label versteht man eine Kunststoffolie, die vorzugsweise einseitig bedruckt ist. Die Label 10, 11 bestehen beispielsweise aus Polystyrol, Propylen, ABS oder Polycarbonat.

Zwischen den Labeln 10, 11 bzw. bei nur einseitig vorgesehenem Label auf diesem befindet sich eine eingespritzte Kunststoffmasse 12, die vorzugsweise aus dem gleichen oder einem ähnlichen Kunststoff wie die Label 10, 11 gebildet wird, so daß sich beim Herstellungsverfahren für die Smart Card 1 die Kunststoffe innig miteinander verbinden.

Bei der Beschreibung des Ausführungsbeispiels gemäß Fig. 1 und 2 war bislang von "Labeln" die Rede. Es versteht sich jedoch, daß statt eines zugeschnittenen Stücks einer Kunststoffolie ganz allgemein eine Folie Verwendung finden kann, die in Abschnitten oder auch endlos bearbeitet wird. Sowohl bei den Labeln wie auch, allgemein ausgedrückt, bei der Folie kann es sich um einseitig oder beidseitig bedrucktes Material handeln. Bei Ausführungsformen der Erfindung sind die Label oder die Folie, insbesondere die Endlosfolie, als Bildtransfer-Label bzw. Bildtransfer-Film ausgebildet. Dies bedeutet, daß das Bildtransfer-Label bzw. der Bildtransfer-Film die Smart Card während des Einspritzvorganges begrenzen. Ein auf diesem Film oder Label aufgebrachter Aufdruck wird dann bei dem Einspritzvorgang auf den eingespritzten Kunststoff übertragen. Das Transfer-Label bzw. der Transfer-Film wird dann nach dem Spritzen wieder entfernt, so daß die fertige Smart Card nur aus dem gespritzten Kunststoffkörper besteht. Die flache Oberseite und/oder die flache Unterseite sind bei diesen Ausführungsbeispielen der Erfindung nicht mit einem Label oder einer sonstwie zugeschnittenen Folie abgedeckt. Lediglich der Aufdruck, beispielsweise ein Bild, wurde vom Transfer-Label bzw. vom Transfer-Film auf den eingespritzten Kunststoff übertragen. Das Transfer-Label oder der Transfer-Film werden nach dem Spritzen der Smart Card separat entfernt und entsorgt.

Im Rahmen der vorliegenden Erfindung können somit auf der interessierenden Oberfläche des Gegenstandes oder ggf. mehreren interessierenden Oberflächen des Gegenstandes Label oder sonstige Kunststoffolien angebracht sein, ebenso wie es möglich ist, alternativ mittels eines Transfer-Labels oder eines Transfer-Films lediglich einen Aufdruck auf eine oder mehrere der genannten Oberflächen zu übertragen. Es besteht dabei auch eine breite Palette von Möglichkeiten, unterschiedliche Werkstoffe oder Halbzeuge als Folie oder Label einzusetzen. Die Label oder Folien können aus den bereits erwähnten Werkstoffen bestehen. Auch der Einsatz von Heißprägefolien ist möglich. Die Label oder Folien können einzeln oder von der Rolle verarbeitet werden.

Wenn daher bei der Beschreibung der Ausführungsbeispiele im Rahmen der vorliegenden Anmeldung von einem "Label" die Rede ist, so darf dies nur beispielhaft verstanden werden, weil bei allen geschilderten Ausführungsbeispielen auch die vorstehend genannten Alternativen einsetzbar sind.

Aus Fig. 2 ist deutlich zu erkennen, daß bei dem dort dargestellten Ausführungsbeispiel das aus dem Träger- und Kontaktplättchen 5 sowie dem Chip 9 gebildete Modul 13 von einer Umhüllung 14 umgeben ist, die in diesem Fall durch einen Abschnitt des oberen Labels 10 gebildet wird, die das Modul 13 eng umschließt.

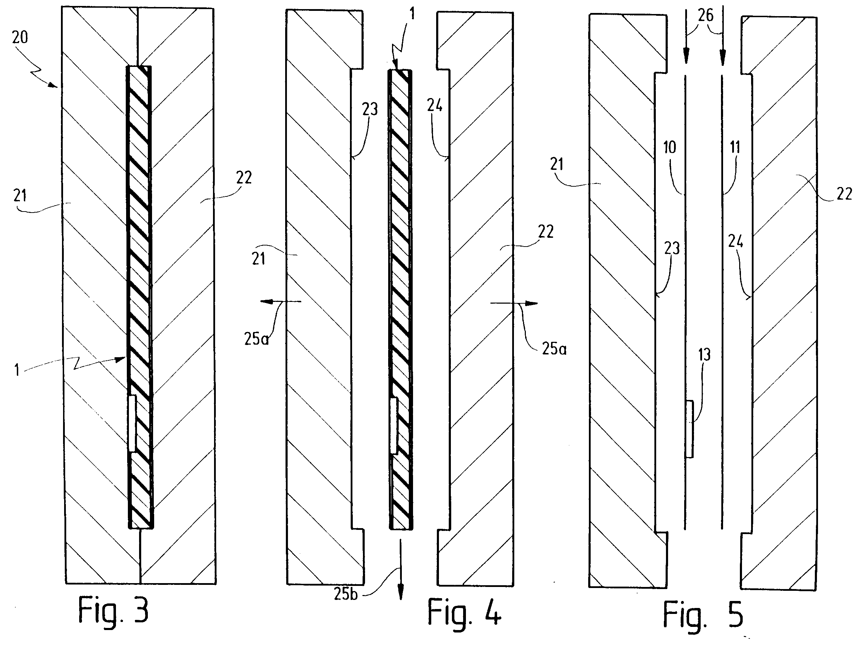

Die Smart Card 1 gemäß den Figuren 1 und 2 wird in einem Kunststoff-Spritzgießverfahren hergestellt. Dieses soll an Hand eines ersten Ausführungsbespiels nachstehend mit den Figuren 3 bis 8 erläutert werden:

Fig. 3 zeigt in äußerst schematisierter Darstellung ein Kunststoff-Spritzgießwerkzeug 20, das aus einer ersten, linken Werkzeughälfte 21 sowie einer zweiten, rechten Werkzeughälfte 22 besteht. Die zugehörigen Einrichtungen zum Öffnen und Schließen des Werkzeugs 20 sowie die Einrichtungen zum Zuführen der Kunststoffmasse 12 und zum Entnehmen bzw. Einlegen der Kunststoffteile sind der Übersichtlichkeit halber nicht dargestellt.

Man erkennt aus Fig. 3, daß sich im Werkzeug 20 eine Smart Card 1 befindet, die in einem vorausgegangenen Produktionszyklus hergestellt wurde.

Das Werkzeug 20 öffnet sich nun, indem die Werkzeughälften 21, 22 entlang der Pfeile 25A seitlich nach außen bewegt werden. Man erkennt in dieser Offenstellung deutlich die Werkzeughohlräume 23 und 24 in den Werkzeughälften 21 und 22. Es sei an dieser Stelle nochmals betont, daß es sich hier nur um eine beispielhafte Darstellung handelt. Die Werkzeughohlräume 23 und 24 können beispielsweise auch als ein einziger Werkzeughohlraum an einer der beiden Werkzeughälften ausgebildet sein, während die jeweils andere Werkzeughälfte an der entsprechenden Kontaktoberfläche dann eben ausgebildet ist.

Mit einem Pfeil 25B ist angedeutet, daß die Smart Card 1 bei geöffnetem Werkzeug 20 gemäß Fig. 4 aus diesem entnommen werden kann, beispielsweise in der in Fig. 4 nach unten eingezeichneten Richtung.

Wie in Fig. 5 dargestellt, können nun von oben in Richtung der Pfeile 26 die beiden Label 10 und 11 eingelegt werden. Eine Einführung von unten oder von der Seite ist aber ebenso möglich. Am Label 10 befindet sich bereits das Modul 13. Das Modul 13 wurde vorab am Label 10 befestigt und zwar in einer Art und Weise, die nachstehend noch im einzelnen erläutert werden wird.

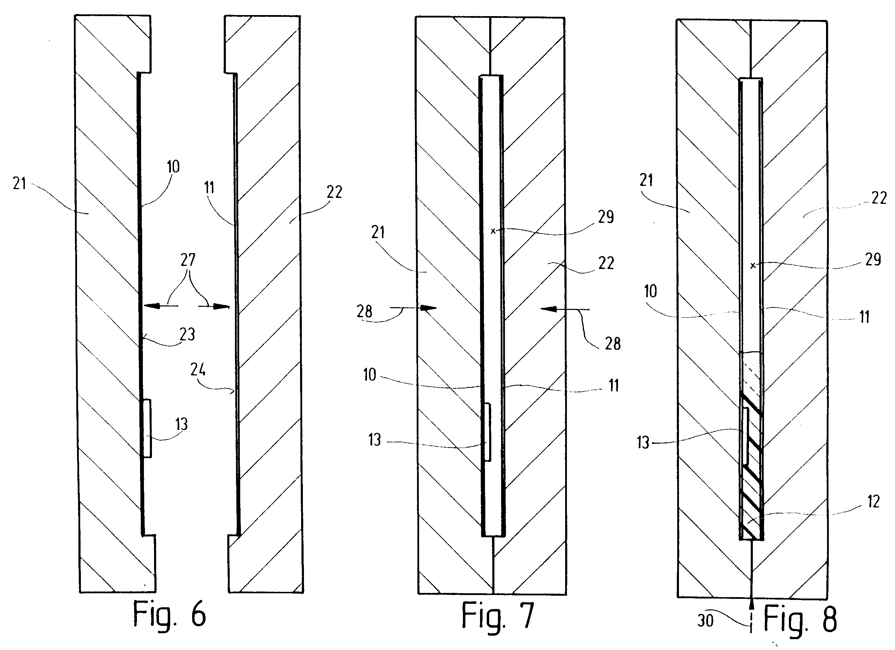

Wie Fig. 6 zeigt, werden die beiden Label 10 und 11 nun in die Formhohlräume 23, 24 eingelegt, wie mit Pfeilen 27 angedeutet ist.

Fig. 7 zeigt, daß die Werkzeughälften 21 und 22 nun wieder geschlossen werden, wie mit Pfeilen 28 angedeutet. Zwischen den Labeln 10 und 11 befindet sich nun ein Hohlraum 29.

Fig. 8 zeigt, daß der Hohlraum 29 nun mit der Kunststoffmasse 12 befüllt werden kann, indem beispielsweise in der Darstellung gemäß Fig. 8 von unten die Kunststoffmasse 12 eingespritzt wird, wie mit einem Pfeil 30 angedeutet. Nach Beendigung des Spritzvorganges ist die Smart Card 1 fertiggestellt und kann entformt werden, wie weiter oben an Hand der Figuren 3 und 4 beschrieben wurde.

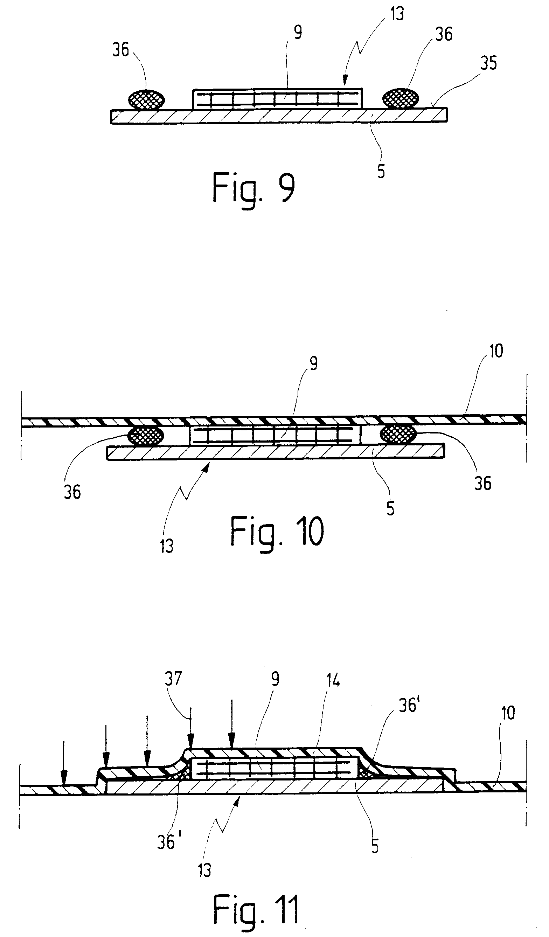

Es wurde bereits erwähnt, daß das Modul 13 vor dem Einlegen des Labels 10 in das Werkzeug 20 an dem Label 10 befestigt wurde. Hierfür gibt es zahlreiche Realisierungsmöglichkeiten, die nachstehend an Hand der Figuren 9 bis 20 beschrieben werden sollen.

Fig. 9 zeigt in einer Seitenansicht das Träger- und Kontaktplättchen 5, auf dem sich der Chip 9 befindet. Auf eine Oberseite 35 des Plättchens 5 werden nun neben dem Chip 9 Klebepunkte 36 aufgetragen.

Fig. 10 zeigt, daß in einem weiteren Arbeitsschritt das Label 10 auf die Anordnung gemäß Fig. 9 aufgesetzt wird oder es wird umgekehrt die Anordnung gemäß Fig. 9 auf das Label 10 aufgesetzt.

Durch die Klebewirkung der Klebepunkte 36 haftet das Modul 13 am Label 10. Das Label 10 kann daher mit dem daran haftenden Modul 13 in das Werkzeug 20 eingesetzt werden.

Während des Spritzvorganges drückt die Kunststoffmasse 12 auf das Label 10 und zwar auf der vom Modul 13 abgewandten Seite. Hierdurch entsteht, wie Fig. 11 zeigt, ein Druck, der mit Pfeilen 37 angedeutet ist. Dieser Druck bewirkt, daß sich das Label 10 in Form der Umhüllung 14 um das Modul 13 herumlegt, wobei aufgrund der beim Spritzgießen herrschenden Temperaturen eine Verformung des Labels 10 nach Art eines Tiefziehvorganges auftreten kann. Die Klebepunkte 36 werden dabei plastifiziert und verformt, wie in Fig. 11 mit 36' angedeutet. Am Ende dieses Vorganges ist damit das Modul 13 dauerhaft und formschlüssig befestigt und bildet mit dem Label 10 eine glatte Oberfläche.

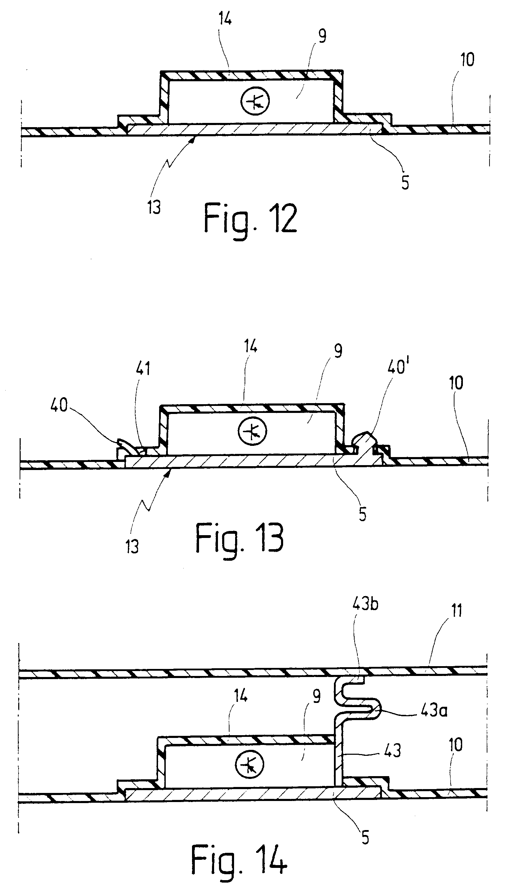

Fig. 12 zeigt ein Ausführungsbeispiel, wie sie bereits prinzipiell in Fig. 2 dargestellt war. Danach ist das Label 10 mit der Umhüllung 14 um das Modul 13 herumgeformt, wobei der Halt des Moduls 13 auch alleine durch die es umgebende Umhüllung 14 dargestellt sein kann.

Bei dem Ausführungsbeispiel gemäß Fig. 13 ist in der linken Hälfte am Plättchen 5 eine Zunge 40 ausgebildet, die durch eine entsprechende Ausnehmung 41 im Label 10 greift. Die Zunge 40 kann z.B. elastisch ausgebildet sein, und durch die Ausnehmung 41 hinter die Rückseite des Labels 10 schnappen. Entsprechend kann, wie in der rechten Hälfte als Alternative dargestellt, ein Knopf 40' durch eine entsprechende Ausnehmung im Label 10 nach Art eines Druckknopfes hindurchgesteckt werden. Durch beide Maßnahmen wird eine verbesserte Ausbruchssicherung des Moduls 13 erreicht.

Bei dem Ausführungsbeispiel gemäß Fig. 14 ist an das Plättchen 5 ein Winkel 43 angeformt, der z.B. bis zum gegenüberliegenden Label 11 reichen kann. Der Winkel 43 ist abschnittsweise als Feder 43a ausgebildet und liegt mit einem flachen Abschnitt 43b am gegenüberliegenden Label 11 an.

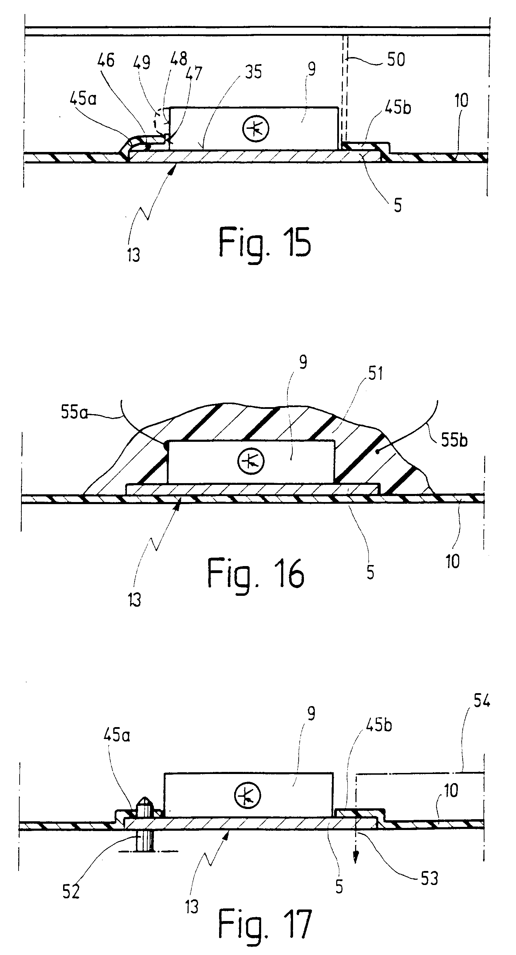

Bei dem Ausführungsbeispiel gemäß Fig. 15 ist eine Aussparung 47 im Label 10 vorgesehen. Das Label 10 greift im Randbereich der Aussparung 47 mit Überlappungen 45 auf das Plättchen 5. Die Überlappungen 45 können mittels Klebepunkten 46 am Plättchen 5 befestigt sein, wie in der linken Hälfte von Fig. 15 mit 45a angedeutet. In der rechten Hälfte von Fig. 15 ist hingegen mit 45b gezeigt, daß unter Umständen auch der Formschluß zwischen der Aussparung 47 und Seiten 48 des Chips 9 ausreichen kann, um das Modul 13 festzuhalten.

In der linken Hälfte von Fig. 15 ist mit 49 ein Vorsprung bezeichnet, der zusätzlich zur Lagesicherung des Moduls 13 beiträgt, da er elastisch durch die Aussparung 47 gesteckt wurde. In der rechten Hälfte von Fig. 15 ist die rechte Überlappung 45b des Labels 10 in einem Abschnitt 50 abgebogen, der ähnlich dem Winkel 43 bei der Variante gemäß Fig. 14 bis zum gegenüberliegenden Label 11 reichen kann.

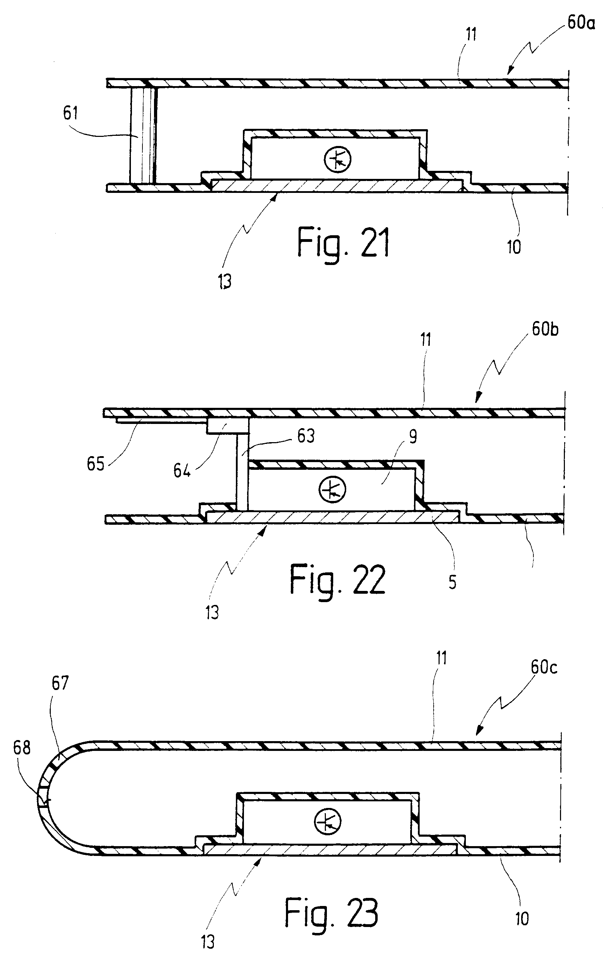

Bei dem in Fig. 16 dargestellten weiteren Ausführungsbeispiel wird das Modul 13 auf dem Label 10 mittels einer Einbettmasse 51 festgehalten. Zu diesem Zweck kann das Modul 13 beispielsweise zunächst lose auf das Label 10 aufgelegt werden. Die Einbettmasse 51 wird dann aufgespritzt, derart, daß das Modul 13 zumindest teilweise von der Einbettmasse 51 überdeckt ist, die abschnittsweise auch auf dem Label 10 aufliegt. Vorzugsweise wird die Einbettmasse 51 so aufgebracht, daß sie das Modul 13 völlig überdeckt, wie in Fig. 16 dargestellt. Durch diese sogenannte "Softeinbindung" ist das Modul 13 im dargestellten Ausführungsbeispiel gemäß Fig. 16 auf der Innenseite des Labels 10 befestigt, so daß das Plättchen 5 nicht freiliegt. Ein Datenaustausch kann daher im dargestellten Ausführungsbeispiel nur drahtlos über eine Antenne vorgenommen werden, die entweder mit eingespritzt wird oder sich am gegenüberliegenden Label befindet, wie weiter unten zu Fig. 22 noch erörtert werden wird.

Alternativ zum Ausführungsbeispiel gemäß Fig. 16 ist es aber selbstverständlich möglich, in der Position des Plättchens 5 eine entsprechende Aussparung im Label 10 vorzusehen, so daß auch in diesem Falle mit einer Softeinbindung das Plättchen 5 als Kontaktplättchen eingesetzt werden kann.

In Fig. 16 ist ferner eine weitere Variante der Erfindung dargestellt. Mit 55a ist nämlich eine erste Verankerung gezeigt, die am Chip 9 befestigt ist, während mit 55b eine zweite Verankerung angedeutet ist, die lediglich teilweise in die Einbettmasse 51 eingespritzt ist.

Die Verankerungen 55a, 55b verbinden sich während des Einspritzvorganges mit der in Fig. 16 nicht dargestellten Kunststoffmasse 12 und erhöhen auf diese Weise die Ausreißfestigkeit des Moduls 13.

Fig. 17 zeigt zwei Varianten eines weiteren Ausführungsbeispiels. Bei der in der linken Hälfte von Fig. 17 dargestellten Variante greift zur Positionierung des Moduls 13 im Werkzeug 20 ein Zapfen 52 des Werkzeugs durch ein entsprechendes Loch im Plättchen 5 und in der linken Überlappung 45a. Bei der in der rechten Hälfte von Fig. 17 dargestellten Variante greift ein Zapfen 53 eines nur schematisch dargestellten Einlegekopfes 54 durch entsprechende Löcher in der rechten Überlappung 45b und im Plättchen 5. Auch hierdurch kann eine entsprechende Positionierung des Moduls 13 erreicht werden.

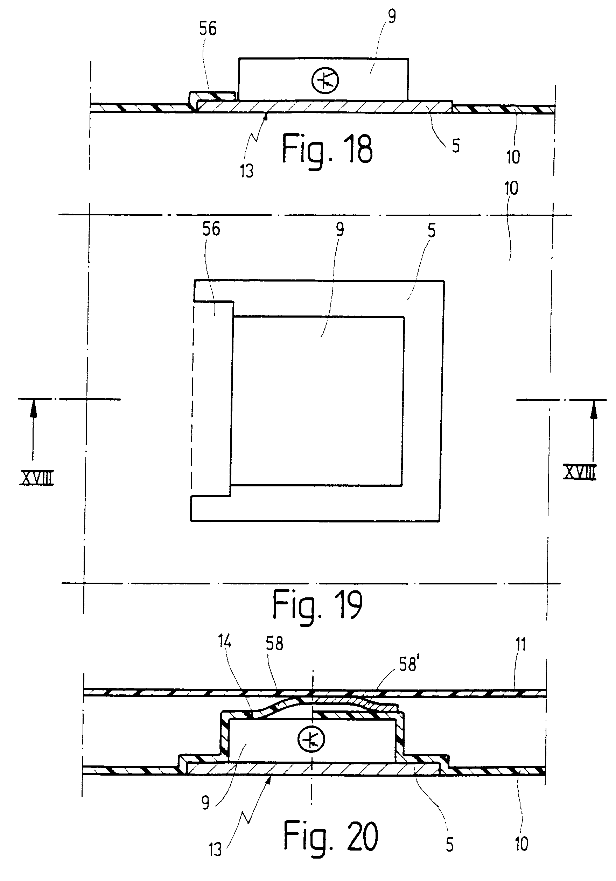

Bei dem Ausführungsbeispiel gemäß den Figuren 18 und 19 ist das Label 10 wiederum ausgespart, jedoch nunmehr in Größe des Plättchens 5. Eine seitliche Zunge 56 oder mehrere derartige Zungen greift über das Plättchen 5 und fixiert auf diese Weise das Modul 13.

Bei dem Ausführungsbeispiel gemäß Fig. 20, linke Hälfte, ist die Umhüllung 14 oberhalb des Chips 9 mit einer Wölbung 58 versehen. Die Wölbung 58 dient zum federnden Abstützen des Moduls 13 am gegenüberliegenden Label 11. Während des Einspritzvorganges wird die Wölbung 58 dann zusammengedrückt. Wie die rechte Hälfte der Fig. zeigt, kann auch ein separates Wölbungselement 58' vorgesehen werden, z.B. ein entsprechend gewölbtes Metallstück.

Gemäß den bislang geschilderten Ausführungsbeispielen wurden die Label 10 und 11 separat vorbereitet und separat in das Werkzeug 20 eingeführt, wie besonders deutlich aus Fig. 5 zu erkennen ist.

Gemäß einem alternativen Verfahren können aber die Label 10 und 11 bereits vor dem Einlegen in das Werkzeug 20 zu einem Verbund gefügt werden, der im folgenden als "Sandwich" bezeichnet werden soll.

Fig. 21 zeigt ein erstes Ausführungsbeispiel eines derartigen Sandwich 60a. Man erkennt, daß die Darstellung ähnlich derjenigen von Fig. 12 ist. Mittels eines Verbindungselementes 61 oder mehrerer derartiger Verbindungselemente sind die Label 10 und 11 jedoch miteinander verbunden, so daß der Sandwich 60a einstückig gehandhabt werden kann.

Bei der Variante gemäß Fig. 22 wird die Verbindung zwischen den Labeln 10 und 11 mittels einer metallischen Stütze 63 hergestellt, die z.B. einstückig mit den Plättchen 5 und analog zum Ausführungsbeispiel gemäß Fig. 14 als Feder ausgebildet sein kann. In vorteilhafter Weise kann die metallische Stütze 63 zugleich als ein- oder mehradriger Leiter für elektrische Signale dienen. Die Stütze 63 kann über eine Feder 64 am gegenüberliegenden Label 11 angreifen, aber auch eine starre Verbindung ist möglich. An der Feder 64 oder der Stütze 63 selbst kann eine Antenne 65 befestigt sein, die vom Chip 9 mit Signalen versorgt wird.

Bei der Variante gemäß Fig. 23 ist der Sandwich 60c insgesamt einstückig ausgebildet, indem die Label 10 und 11 durch dieselbe Folie gebildet werden, die über einen bogenförmigen Abschnitt 67 die Label 10 und 11 miteinander verbindet. In den Abschnitt 67 kann eine Einspritzöffnung 68 eingelassen sein, um das Einspritzen der Kunststoffmasse 12 zu ermöglichen.

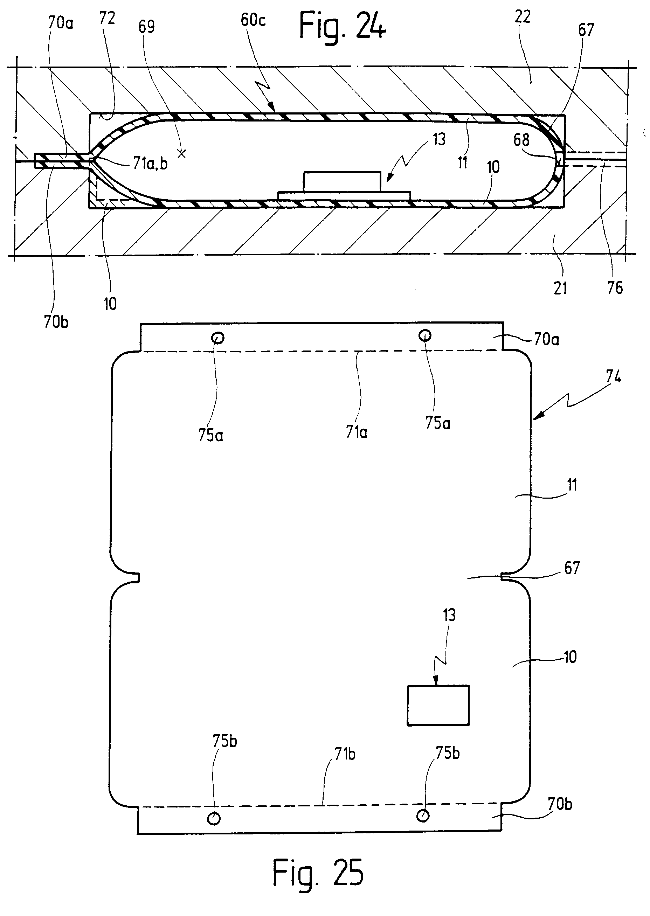

Fig. 24 zeigt hierzu die Anordnung des Sandwich 60c zwischen den Werkzeughälften 21 und 22. Der Sandwich 60c bildet dabei einen Hohlraum 69, der über die Einspritzöffnung 68 zugänglich ist.

Die Label 10 und 11 laufen in der hier links dargestellten Hälfte von Fig. 24 in Laschen 70a, 70b aus, die über Perforationen 71a, 71b von den Labeln 10, 11 teilweise getrennt sind. Die spätere Trennung der Laschen 70a, 70b von den Labeln 10, 11 ist durch diese Perforationen vorbereitet. Die Laschen 70a, 70b sind aufeinandergelegt zwischen den Werkzeughälften 21, 22 eingespannt.

Der Sandwich 60c füllt im dargestellten Ausführungsbeispiel den Werkzeughohlraum 72 nicht vollständig aus. Der Werkzeughohlraum kann aber an die Form des Sandwich angepaßt werden oder umgekehrt, wie mit 10' angedeutet.

Der Sandwich 60c wird z.B. durch Zusammenlegen eines Zuschnitts 74 hergestellt, der in Fig. 25 in verkleinertem Maßstab abgewickelt dargestellt ist.

Man erkennt, daß im Zuschnitt 74 im Bereich der Laschen 70a und 70b Registerlöcher 75a, 75b vorgesehen sind. Mittels der Registerlöcher 75a, 75b kann eine paßgenaue Lage des Sandwich 60c im Werkzeughohlraum 72 gewährleistet werden, indem zugehörige Zapfen (nicht dargestellt) der Werkzeughälften 21, 22 durch die Registerlöcher 75a, 75b greifen.

Auf der den Laschen 70a, 70b gegenüberliegenden Seite der Werkzeughälften 21, 22 ist ein Angußkanal 76 vorgesehen. Der Angußkanal 76 fluchtet mit der Einspritzöffnung 68.

Beim Einspritzvorgang wird die Kunststoffmasse 12 durch den Angußkanal 76 und die Einspritzöffnung 68 in den Hohlraum 69 des Sandwich 60c eingespritzt. Durch den sich ausbildenden Druck im Hohlraum 69 reißen die Perforationen 71a, 71b auf, so daß der Sandwich 60c den Werkzeughohlraum 72 auf der linken Seite von Fig. 24 vollständig ausfüllt. Auf der rechten Seite von Fig. 24 wird der bogenförmige Abschnitt 67 so weit gedehnt, daß auch dort die Ecken des Werkzeughohlraums 72 ausgefüllt werden. Auf diese Weise wird erreicht, daß die lediglich zur Positionierung des Sandwich 60c erforderlichen Laschen 70a, 70b abgetrennt werden und beim Ausformen der Smart Card entfernt werden können.

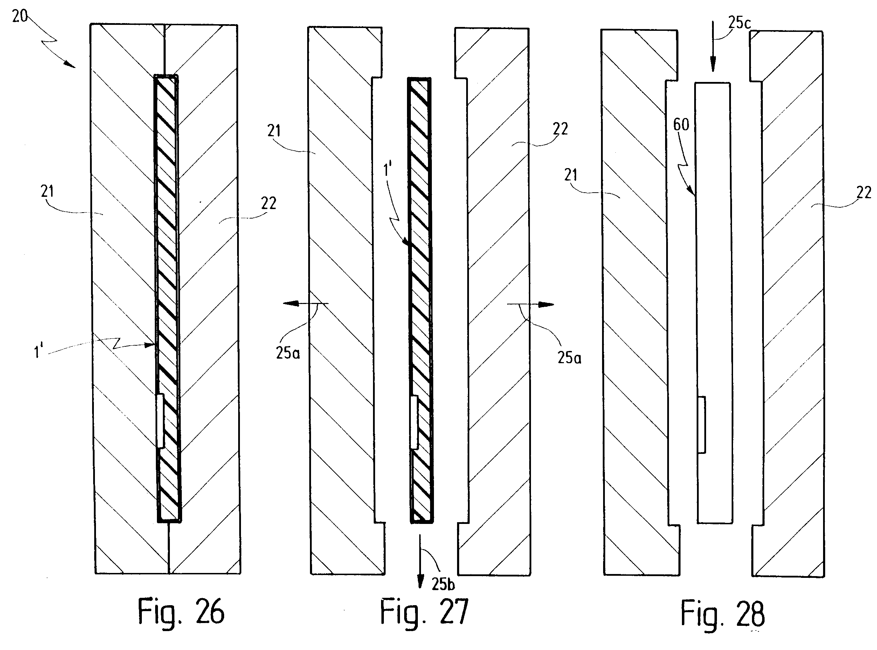

Das Herstellungsverfahren der Smart Card unter Verwendung eines Sandwich ist in zwei Ausführungsbeispielen an Hand der Figuren 26 bis 30 veranschaulicht:

Fig. 26 zeigt wieder die Ausgangssituation, in der sich die Smart Card 1' des vorausgegangenen Einspritzvorganges noch innerhalb der geschlossenen Werkzeughälften 21, 22 befindet.

Werden die Werkzeughälften 21, 22 in Richtung der Pfeile 25a geöffnet, wie in Fig. 27 dargestellt, so kann die Smart Card 1' entnommen werden, wie mit dem Pfeil 25b dargestellt.

Gemäß Fig. 28 kann nun der Sandwich 60 gesamthaft z.B. von oben in Richtung des Pfeiles 25c eingelegt werden. Der Sandwich 60 kann dabei auf einer oder auf beiden Seiten des Formhohlraums positioniert werden.

Die Werkzeughälften 21, 22 können nun wieder geschlossen werden und der Spritzgießvorgang kann ablaufen, wie bereits weiter oben zu den Figuren 7 und 8 geschildert wurde.

Zur Entnahme der während des vorausgegangenen Einspritzvorganges hergestellten Smart Card 1' und zum Einlegen des Sandwich 60 kann ein- und derselbe Einlegearm verwendet werden. Hierzu kann der Einlegearm z. B. an seinem vorderen Ende eine Vorrichtung zum Entnehmen der fertig gespritzten Smart Card 1' und unmittelbar in Verschieberichtung dahinter eine Vorrichtung zum Einlegen des Sandwich umfassen. Der Einlegearm fährt dann zunächst nur mit seinem vorderen Ende zwischen die Werkzeughälften 21, 22 und entnimmt mit seinem vorderen Ende die Smart Card 1'. Er wird dann so weit vorgeschoben, daß er anschließend mit demjenigen Abschnitt zwischen den Werkzeughälften 21, 22 positioniert ist, über den der Sandwich eingelegt werden kann. Sobald dies geschehen ist, wird der Einlegearm gesamthaft aus dem Bereich zwischen den Werkzeughälften 21, 22 zurückgezogen.

Alternativ kann auch ein Einlegearm verwendet werden, der gleichzeitig rechts/links arbeitet, d.h. auf der einen Seite die fertige Smart Card 1' entnimmt und zur selben Zeit auf der anderen Seite den Sandwich einlegt.

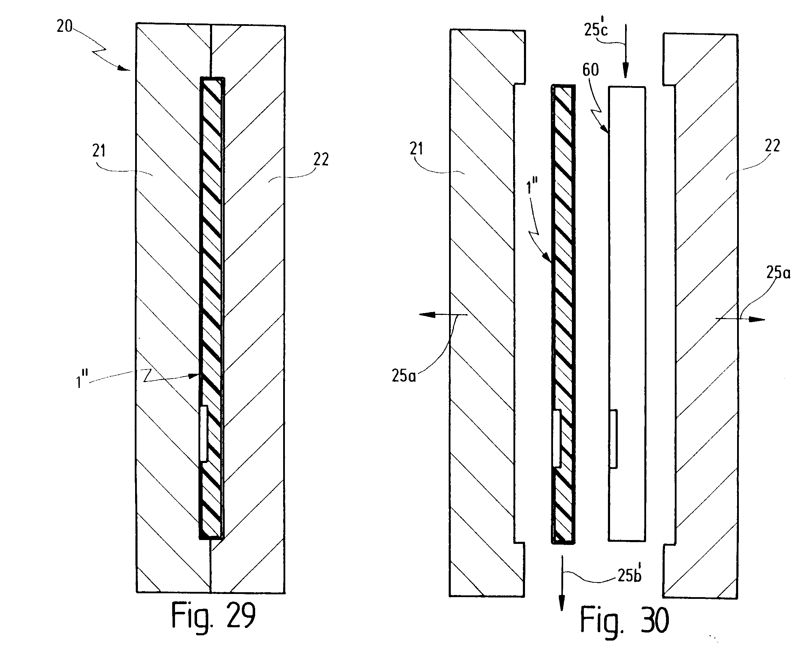

Bei einer Variante dieses Verfahrens kann aus der Ausgangsposition gemäß Fig. 29 mit geschlossenen Werkzeughälften 21 und 22 die im vorausgegangenen Zyklus gespritzte Smart Card 1'' in Richtung des Pfeils 25b' entnommen werden, wie in Fig. 30 dargestellt ist. Gleichzeitig kann nun der Sandwich 16 eingeführt werden, wie mit einem Pfeil 25c' in Fig. 30 ebenfalls gezeigt ist. Durch das gleichzeitige Ablaufen des Entnahme- und des Einlegevorganges kann eine Zeitersparnis erzielt werden.

Beim Kunststoff-Spritzgießen von Smart Cards wird auf eine extreme Oberflächenqualität geachtet, wie bereits geschildert wurde. Aus diesem Grunde werden Smart Cards nach herkömmlichen Herstellungsverfahren von der Seite her über Schlitze angegossen bzw. angespritzt, die in die Schmalseite der Smart Card münden.

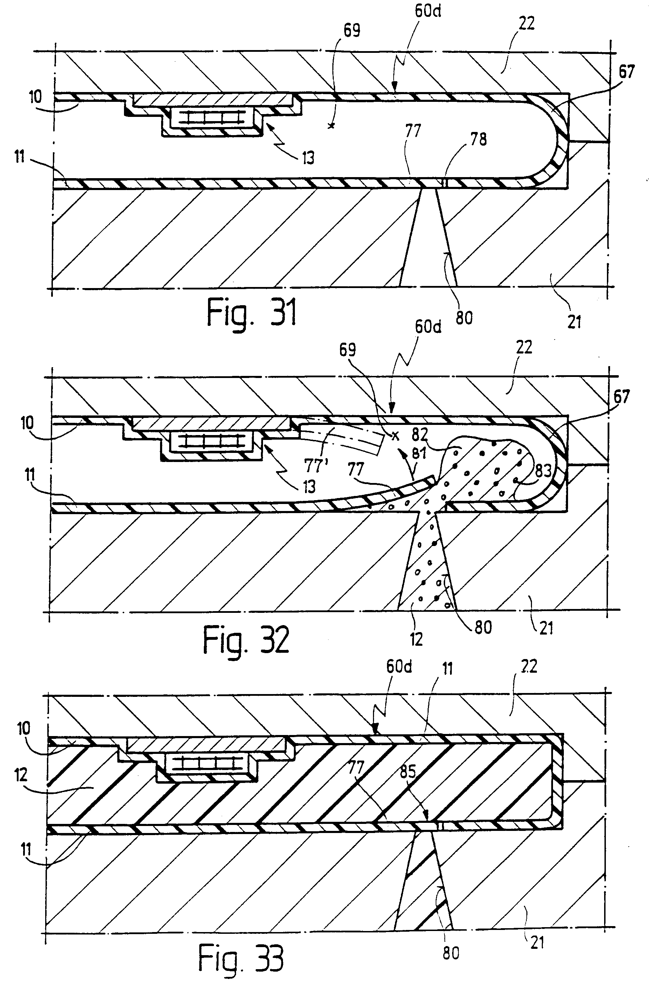

Im Gegensatz dazu ist auch ein Anguß von der Fläche, d.h. der Oberseite 2 oder der Unterseite 3 der Smart Card 1 her möglich, wenn ein Verfahren eingesetzt wird, wie es nachstehend an Hand der Figuren 31 bis 33 erläutert werden wird:

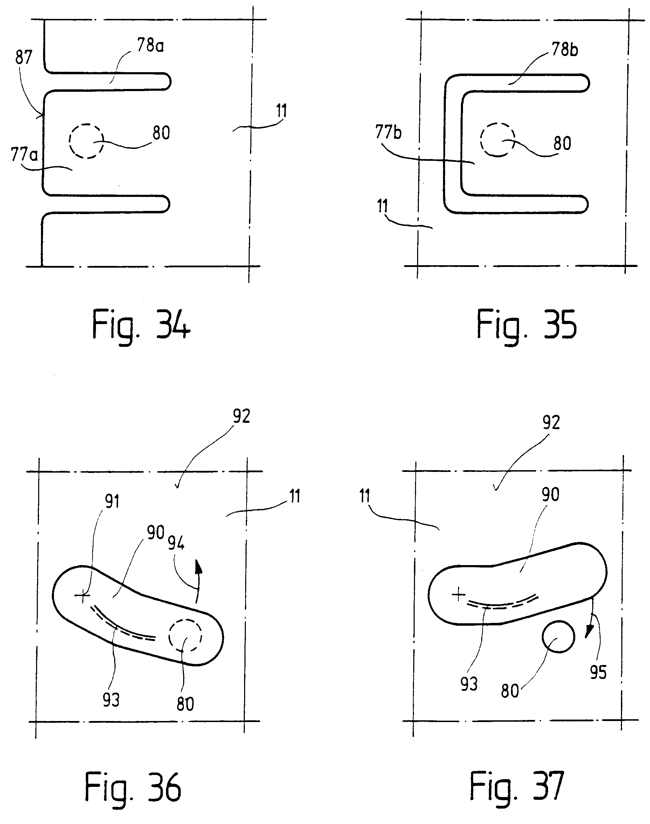

Bei dem dargestellten Verfahren wird beispielhaft von einer Herstellungstechnik mittels eines Sandwich ausgegangen, ähnlich wie dies bereits zu Fig. 24 geschildert wurde. Der entsprechende Sandwich ist in den Figuren 31 bis 33 mit 60d bezeichnet. Der Sandwich 60d ist im Bereich des Labels 11 mit einer Zunge 77 versehen, die über einen entsprechend geformten Schlitz 78 vom umgebenden Material des Labels 11 getrennt ist, wie dies weiter unten in Fig. 34 und 35 noch erläutert werden wird. Die Zunge kann auch als Teil des Moduls 13 ausgebildet werden, wie mit 77' in Fig. 32 angedeutet.

Unterhalb des freien Endes der Zunge 77 befindet sich die Mündung eines Angußtrichters 80 der Werkzeughälfte 21.

Wenn nun, wie in Fig. 32 dargestellt, die Kunststoffmasse 12 durch den Angußtrichter 80 eingespritzt wird, wird die Zunge 77 nach oben weggebogen, wie mit einem Pfeil 81 in Fig. 32 angedeutet ist. Man erkennt bei 82, daß die Kunststoffmasse 12 nun in den Hohlraum 69 des Sandwich 60d eintreten kann. Die Ausdehnung der Kunststoffmasse 12 sowie die Flexibilität der Karte können durch Zusatz eines geeigneten Blähmaterials gefördert werden, das in Fig. 32 mit 83 angedeutet ist.

Die Kunststoffmasse 12 bzw. 82 füllt nun den Hohlraum 69 vollkommen aus und es bildet sich im Hohlraum 69 ein Überdruck, gegebenenfalls verstärkt durch das Blähmaterial 83.

Durch diesen Druck wird bei vollständig gefülltem Hohlraum 69 nun die Zunge 77 wieder in ihre Ausgangslage zurückgedrückt, wie mit einem Pfeil 85 in Fig. 33 angedeutet ist. Die Zunge 77 verschließt den Angußtrichter 80, so daß im Bereich von dessen Übergang zum gespritzten Hohlraum keine Verbindung aus Kunststoffmasse 12 mehr besteht. Die Oberfläche der so hergestellten Smart Card ist vielmehr makellos, weil sie nur aus dem Material des Labels 11 besteht.

Der Sandwich 60d ist vorzugsweise so elastisch oder thermoplastisch ausgebildet, daß er nach Abschluß des Spritzgießvorganges den Formhohlraum völlig ausfüllt, wie in der rechten Hälfte von Fig. 33 angedeutet.

Fig. 34 zeigt ein erstes Ausführungsbeispiel für die Zunge 77a im Label 11. Beim Beispiel der Fig. 34 grenzt die Zunge 77a an einen Rand 87, d.h. eine Wand des Werkzeughohlraums 72. Der Schlitz 78 ist daher als zwei Einzelschlitze 78a ausgebildet, die die Zunge 77b beidseitig begrenzen.

Bei der Variante gemäß Fig. 35 hingegen befindet sich die Zunge 77b mitten in der Oberfläche des Labels 11. Der Schlitz 78b ist aus diesem Grunde z.B. U-förmig ausgebildet und umgrenzt die Zunge 77b auf drei Seiten.

Es versteht sich, daß insoweit zahlreiche Varianten möglich sind. So ist es beispielsweise auch möglich, im Label 11 im Abstand zueinander zwei kurze, parallele Schlitze auszubilden. Der Bereich des Labels 11 zwischen diesen beiden Schlitzen wölbt sich dann kurzzeitig nach innen und gestattet einen seitlichen Durchtritt der Kunststoffmasse durch die beiden Schlitze. Der Bereich wird dann bei gefülltem Hohlraum wieder in die Ausgangslage zurückverformt.

In den Figuren 36 und 37 ist zur Erreichung desselben Ziels noch eine Variante dargestellt, bei der ein Scherelement 90 seitlich über die Öffnung des Angußtrichters 80 geführt wird.

Das Scherelement 90 ist zu diesem Zweck um eine schematisch angedeutete Drehachse 91 dreh- oder verformbar. Das Scherelement 90 wird mit seiner Unterseite auf der Oberfläche 92 des Labels 11 geführt. Wenn die Kunststoffmasse in der Darstellung der Fig. 36 von unten in die Zeichenebene eintritt, wird das Scherelement 90 nach oben verschwenkt, wie mit einem Pfeil 94 angedeutet. Am Ende des Einspritzvorganges schwenkt das Scherelement 90 wieder zurück, wie mit einem Pfeil 95 in Fig. 37 angedeutet.

Zur Auslenkung des Scherelements 90 dient ein Auslenk- und Rückstellelement 93. Dieses kann ein Bimetall sein, das durch die Wärmeeinwirkung des eingespritzten Kunststoffes geformt wird. Es kann sich aber auch um einen Bereich mit sogenanntem "Memory-Effekt" handeln, oder um eine geeignet ausgebildete Schräge an der Unterseite des Scherelementes 90.

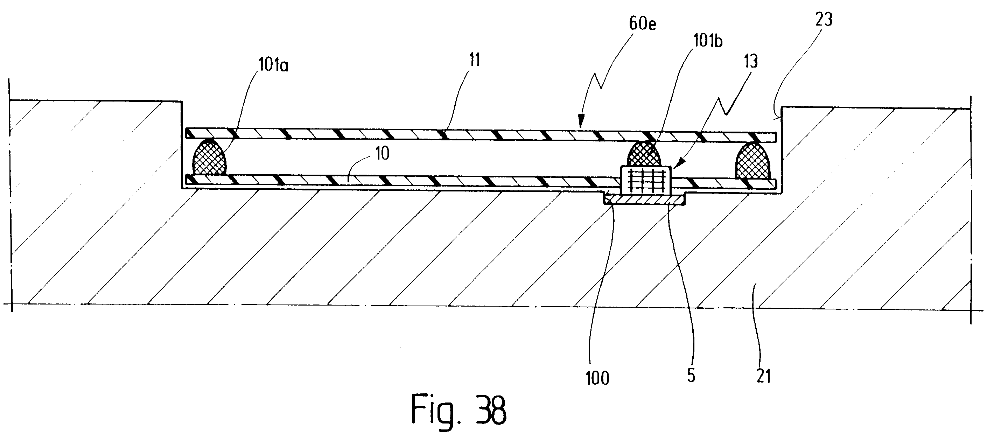

Bei dem in Fig. 38 dargestellten Ausführungsbeispiel wird schließlich ein Sandwich 60e der gezeigten Art verwendet. Bei diesem Sandwich 60e sind die Label 10, 11 miteinander über Klebepunkte 101a und 101b verbunden. Die Klebepunkte 101a befinden sich zwischen den Labeln 10, 11, während der Klebepunkt 101b sich vom Modul 13 zum gegenüberliegenden Label 11 erstreckt.

Der Sandwich 60e befindet sich im ersten Werkzeughohlraum 23 der ersten Werkzeughälfte 21. Bei diesem Ausführungsbeispiel steht das Plättchen 5 geringfügig über das Label 10 vor. Zu diesem Zweck ist eine entsprechende Ausnehmung 100 im ersten Werkzeughohlraum 23 angebracht. Die Ausnehmung 100 dient zugleich zur Positionierung der Gesamtanordnung.

Man erkennt ferner, daß der Sandwich 60e den ersten Werkzeughohlraum 23 nicht vollständig ausfüllt. Das in Fig. 38 nicht dargestellte Gegenwerkzeug, nämlich die zweite Werkzeughälfte, ragt an dieser Stelle so weit in den ersten Werkzeughohlraum 23 hinein, daß der Sandwich 60e bei geschlossenem Werkzeug dichtgehalten wird. Daraus folgt, daß der Sandwich in der einen oder in der anderen Werkzeughälfte positioniert werden kann und entweder kleiner oder größer als der jeweils zugehörige Werkzeughohlraum dimensioniert sein kann, ohne daß dies den Rahmen der vorliegenden Erfindung verläßt.

## Patentansprüche

1. Verfahren zum Herstellen einer Smart Card (1), bei dem mindestens eine, eine flache Seite (2, 3) der Smart Card (1) bildende Folie sowie ein, einen Chip (9) sowie ein Träger- und Kontaktplättchen (5) umfassendes Modul (13) an eine Oberfläche eines Hohlraums (23, 24; 72) eines Kunststoff-Spritzgießwerkzeugs (20) eingebracht werden, und der verbleibende Hohlraum alsdann mit einer Kunststoffmasse (12) ausgespritzt wird, wobei das Modul (13) eine vorbestimmte Lage im Hohlraum (23, 24) einnimmt, dadurch gekennzeichnet, daß das Modul (13) vor dem Einbringen in den Hohlraum (23, 24; 72) in einer vorbestimmten Position an der einen Folie befestigt und gemeinsam mit der Folie in den Hohlraum (23; 72) eingebracht wird.

2. Verfahren nach Anspruch 1, dadurch gekennzeichnet, daß das Modul (13) direkt an der Oberfläche des Hohlraums (23, 24; 72) anliegt.

3. Verfahren nach Anspruch 1, dadurch gekennzeichnet, daß mindestens eine Folie zwischen dem Modul (13) und der Oberfläche des Hohlraums (23, 24; 72) angeordnet ist.

4. Verfahren nach einem oder mehreren der Ansprüche 1 bis 3, dadurch gekennzeichnet, daß das Modul (13) durch Kleben (46) mit der Folie verbunden wird.

5. Verfahren nach einem oder mehreren der Ansprüche 1 bis 4, dadurch gekennzeichnet, daß das Modul (13) durch Formschluß mit der Folie verbunden wird.

6. Verfahren nach einem oder mehreren der Ansprüche 1 bis 5, dadurch gekennzeichnet, daß das Modul (13) an der Folie mittels Tiefziehen der Folie befestigt wird.

7. Verfahren nach einem oder mehreren der Ansprüche 1 bis 6, dadurch gekennzeichnet, daß das Modul (13) mit einem Vorsprung (40, 40') versehen ist, der durch eine Ausnehmung (41) der Folie greift.

8. Verfahren nach einem oder mehreren der Ansprüche 1 bis 7, dadurch gekennzeichnet, daß das Modul (13) in einer Aussparung (47) der Folie gehalten wird.

9. Verfahren nach Anspruch 8, dadurch gekennzeichnet, daß die Aussparung (47) den Chip (9) umschließt.

10. Verfahren nach Anspruch 8, dadurch gekennzeichnet, daß die Aussparung (47) das Plättchen (5) umschließt.

11. Verfahren nach Anspruch 8 oder 9, dadurch gekennzeichnet, daß das Modul (13) mit einem über die Aussparung (47) ragenden Vorsprung (49) versehen ist.

12. Verfahren nach einem oder mehreren der Ansprüche 1 bis 11, dadurch gekennzeichnet, daß die Folie mit einer das Modul (13) haltenden Zunge (56) versehen ist.

13. Verfahren nach einem oder mehreren der Ansprüche 1 bis 12, dadurch gekennzeichnet, daß von der Position des Moduls (13) ausgehend ein Steg (43, 50, 63) zu einer zweiten, die gegenüberliegende Seite (3) bildenden Folie führt.

14. Verfahren nach Anspruch 13, dadurch gekennzeichnet, daß der Steg (43) als ein Teil des Moduls (13) ausgebildet ist.

15. Verfahren nach Anspruch 13, dadurch gekennzeichnet, daß der Steg als ein Abschnitt (50) der Folie ausgebildet ist.

16. Verfahren nach Anspruch 13 oder 14, dadurch gekennzeichnet, daß der Steg als eine elektrisch leitfähige Stütze (63) ausgebildet ist, über die Signale vom Chip (9) zu einer an der zweiten Folie angeordneten Antenne (65) übertragbar sind.

17. Verfahren nach einem oder mehreren der Ansprüche 13 bis 16, dadurch gekennzeichnet, daß der Steg (43) über eine Feder (43a) an der zweiten Folie anliegt.

18. Verfahren nach einem oder mehreren der Ansprüche 1 bis 17, dadurch gekennzeichnet, daß das Modul (13) mittels einer das Modul (13) mindestens teilweise überdeckenden Einbettmasse (51) an der Folie befestigt ist.

19. Verfahren nach einem oder mehreren der Ansprüche 1 bis 18, dadurch gekennzeichnet, daß in den verbleibenden Hohlraum Verankerungen (55a, 55b) ragen, die mit dem Modul (13) verbunden sind.

20. Verfahren nach Anspruch 19, dadurch gekennzeichnet, daß die Verankerungen (55a) unmittelbar mit dem Modul (13) verbunden sind.

21. Verfahren nach Anspruch 18 und 19, dadurch gekennzeichnet, daß die Verankerungen (55e) teilweise in der Einbettmasse (51) eingelagert sind.

22. Verfahren nach einem oder mehreren der Ansprüche 1 bis 21, dadurch gekennzeichnet, daß die Folie mittels Zapfen (52, 53) in der vorbestimmten Lage im Hohlraum (23, 24; 72) gehalten wird.

23. Verfahren nach Anspruch 22, dadurch gekennzeichnet, daß der Zapfen (52) Teil des Werkzeugs (20) ist.

24. Verfahren nach Anspruch 22, dadurch gekennzeichnet, daß der Zapfen (53) Teil eines Einlegearmes (54) ist.

25. Verfahren nach einem oder mehreren der Ansprüche 1 bis 24, dadurch gekennzeichnet, daß das Modul (13) federnd an einer zweiten, die gegenüberliegende Seite (3) bildenden Folie anliegt.

26. Verfahren nach Anspruch 25, dadurch gekennzeichnet, daß das Modul (13) über eine elastische Wölbung (58, 58') an der zweiten Folie anliegt.

27. Verfahren nach Anspruch 26, dadurch gekennzeichnet, daß die Wölbung (58) eine Wölbung der Folie ist.

28. Verfahren nach Anspruch 26, dadurch gekennzeichnet, daß die Wölbung (58') durch ein gewölbtes, separates Bauteil gebildet wird.

29. Verfahren nach einem oder mehreren der Ansprüche 1 bis 28, dadurch gekennzeichnet, daß die mindestens eine Folie ein Label (10, 11) ist.

30. Verfahren nach einem oder mehreren der Ansprüche 1 bis 29, dadurch gekennzeichnet, daß die mindestens eine Folie ein Trägerfilm ist.

31. Verfahren nach einem oder mehreren der Ansprüche 1 bis 30, dadurch gekennzeichnet, daß die mindestens eine Folie als Bildtransfer-Folie ausgebildet ist.

32. Vorrichtung zum Herstellen einer Smart Card (1), mit einer Handhabungsvorrichtung zum Einbringen mindestens einer, eine flache Seite (2, 3) der Smart Card (1) bildenden Folie sowie eines, einen Chip (9) sowie ein Träger- und Kontaktplättchen (5) umfassenden Moduls (13) in einer vorbestimmten Lage an eine Oberfläche eines Hohlraumes (23, 24; 72) eines Kunststoff-Spritzgießwerkzeugs (20), und mit einer Einspritzvorrichtung zum Ausspritzen des nach dem Einbringen von Folie und Modul (13) verbleibenden Hohlraums (22, 23; 72) mit einer Kunststoffmasse (12), dadurch gekennzeichnet, daß eine Befestigungsvorrichtung vorgesehen ist, um das Modul (13) vor dem Einbringen in den Hohlraum (23, 24; 72) in einer vorbestimmten Position an der einen Folie zu befestigen.

33. Vorrichtung nach Anspruch 32, dadurch gekennzeichnet, daß die mindestens eine Folie ein Label (10, 11) ist.

34. Vorrichtung nach Anspruch 32 oder 33, dadurch gekennzeichnet, daß die mindestens eine Folie ein Trägerfilm ist.

35. Vorrichtung nach einem oder mehreren der Ansprüche 32 bis 34, dadurch gekennzeichnet, daß die mindestens eine Folie als Bildtransfer-Folie ausgebildet ist.

36. Folie für die Herstellung von Smart Cards (1), wobei die Folie zur Ausbildung einer flachen Seite (2, 3) der Smart Card (1) vorgesehen ist, dadurch gekennzeichnet, daß an der Folie ein, einen Chip (9) sowie ein Träger- und Kontaktplättchen (5) umfassendes Modul (13) befestigt ist.

37. Folie nach Anspruch 36, dadurch gekennzeichnet, daß sie ein Label (10, 11) ist.

38. Folie nach Anspruch 36 oder 37, dadurch gekennzeichnet, daß sie ein Trägerfilm ist.

39. Folie nach einem oder mehreren der Ansprüche 36 bis 38, dadurch gekennzeichnet, daß sie als Bildtransfer-Folie ausgebildet ist.
